# EUROPEAN PATENT APPLICATION

(11) **EP 4 600 815 A1**
(43) Date of publication of application: **13.08.2025**
(21) Application number: 23876534.1
(22) Date of filing: 26.09.2023
(51) Int. Cl.: G06F 9/451, G06F 3/0484

(54) **CONTENT PRESENTATION METHOD AND APPARATUS, DEVICE, AND STORAGE MEDIUM**

(30) Priority: 09.10.2022 CN 202211231488
(71) Applicant: Beijing Zitiao Network Technology Co., Ltd., Beijing 100190 (CN)
(72) Inventor: WU, Yiying, Beijing 100028 (CN); BAI, Xiaoshuang, Beijing 100028 (CN); YANG, Jiahui, Beijing 100028 (CN); ZHENG, Ziyang, Beijing 100028 (CN)
(74) Representative: Marks & Clerk LLP
(86) International application number: PCT/CN2023/121692
(87) International publication number: WO 2024/078330

(57) **Abstract**

A method, an apparatus, a device and a storage medium for content presentation are provided. The method includes presenting a first set of media content items in a first view on a content presentation interface, the first set of media content items including at least one media content item; and in response to detecting first switching on the content presentation interface, presenting the first set of media content items in a second view on the content presentation interface.

## Description

**This** application claims the benefit of Chinese Patent Application No. 202211231488.X, filed on October 9, 2022, entitled "METHOD, APPARATUS, DEVICE AND STORAGE MEDIUM FOR CONTENT PRESENTATION", the entire content of which is incorporated herein by reference.

### FIELD

Example embodiments of the present disclosure generally relate to the field of computers, and more particularly, to a method, an apparatus, a device, and a computer-readable storage medium for content presentation.

### BACKGROUND

Currently, more and more applications are designed to provide various services to users. For example, in a content sharing application, users may browse, comment, and forward contents of various types (including media contents such as texts, videos, images, image sets, sounds, etc.). In addition, the content sharing application further allows the user to create and share the media content.

### SUMMARY

**In** a first aspect of the present disclosure, a method for content presentation is provided. The method includes presenting a first set of media content items in a first view on a content presentation interface, the first set of media content items including at least one media content item; and in response to detecting first switching on the content presentation interface, presenting the first set of media content items in a second view on the content presentation interface.

**In** a second aspect of the present disclosure, an apparatus for content presentation is provided. The apparatus includes a first presenting module configured to present a first set of media content items in a first view on a content presentation interface, the first set of media content items including at least one media content item, and a second presenting module configured to in response to detecting first switching on the content presentation interface, present the first set of media content items in a second view on the content presentation interface.

**In** a third aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect.

**In** a fourth aspect of the present disclosure, a computer-readable storage medium is provided. The medium stores a computer program, and when the computer program is executed by a processor, causes the processor to perform the method of the first aspect.

**It** should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, in which:
FIG. 1 illustrates a schematic diagram of an example environment in which embodiments of the present disclosure may be implemented;
FIG. 2 illustrates a flowchart of a process for content presentation according to some embodiments of the present disclosure;
FIGS. 3A-3E illustrate schematic diagrams of example interfaces related to content presentation according to some embodiments of the present disclosure;
FIG. 4 illustrates a block diagram of an apparatus for content presentation according to some embodiments of the present disclosure; and
FIG. 5 illustrates an electronic device in which one or more embodiments of the present disclosure may be implemented.

### DETAILED DESCRIPTION

Embodiments of the present disclosure will be described in more detail below with reference to the accompanying drawings. Although certain embodiments of the present disclosure are illustrated in the accompanying drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit the scope of the present disclosure.

In the description of the embodiments of the present disclosure, the term "including" and the like are to be understood as open inclusion, i.e., "including but not limited to". The term "based on" should be understood as "based at least in part". The term "one embodiment" or "the embodiment" should be understood as "at least one embodiment". The term "some embodiments" should be understood as "at least some embodiments". Other explicit and implicit definitions may also be included below.

In this specification, unless explicitly stated, performing a step "in response to A" does not mean that the step is performed immediately after "A", but may include one or more intermediate steps.

It will be appreciated that the data (including but not limited to the data itself, data acquisition, use, storage, or deletion) involved in the technical solutions of the present disclosure should comply with the requirements of the corresponding laws, regulations and relevant provisions.

It will be appreciated that before the technical solutions of the embodiments of the present disclosure are used, the relevant users should be informed of the type, the usage scope, the usage scenario of the information in an appropriate manner according to relevant laws and regulations, and authorization of the relevant users should be obtained.

For example, in response to receiving an unsolicited request from a user, prompt information is sent to the relevant user to explicitly remind the relevant user that the operation requested to be executed will need to obtain and use information of the relevant user, such that the relevant user may autonomously select, according to prompt information, whether to provide profile information for software or hardware (such as an electronic device, an application, a server, or a storage medium) that executes the operation of the technical solutions of the present disclosure.

As an optional but non-limiting implementation, in response to receiving an unsolicited request from the relevant user, for example, the prompt information may be sent to the relevant user by a pop-up window, and the prompt information may be presented in the form of text in the pop-up window. In addition, the popup window may also carry a selection control for the user to select 'agree' or 'don't agree' to provide information to the electronic device.

It will be appreciated that the above notifying and obtaining the user authorization process are merely examples, and do not limit the implementation of the present disclosure, and other methods meeting relevant laws and regulations may also be applied to the implementation of the present disclosure.

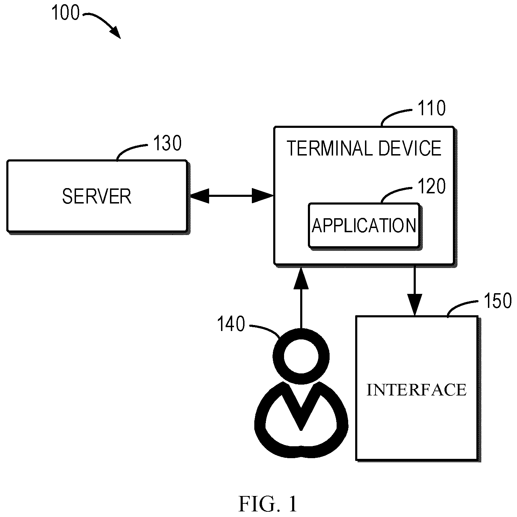

FIG. 1 illustrates a schematic diagram of an example environment 100 in which embodiments of the present disclosure may be implemented. In the example environment 100, the terminal device 110 is installed with an application 120. The user 140 may interact with the application 120 via the terminal device 110 and/or an attachment device of the terminal device 110. The application 120 may be a social application, such as a content sharing application. The application 120 may provide the user 140 with one or more services related to the media content item, including creation, publication, browsing, commenting, forwarding, etc. of the media content item. The media content item here includes contents of one or more types, such as images, image sets, videos, animated GIFs, audio, text, etc.

In the environment 100 of FIG. 1, when the application 120 is active, the terminal device 110 may present an interface 150 of the application 120. The interface 150 may include various interfaces that may be provided by the application 120, such as a profile interface, a media content details interface, a content creation interfaces, a content publication interface, a message interface, etc. The application 120 may provide content creation functions, including shooting, uploading, editing, and/or publishing media content items.

In some embodiments, the terminal device 110 communicates with the server 130 to provide services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Generally, on a specific content presentation interface of an application, such as a profile home interface, the content associated with the user may be displayed, including the content published by the user, the content favorited by the user, the content liked by the user like, etc. In some applications, different content may be presented in categories, and the content under different categories may be switched and presented through a navigation tag. For example, the user-public media content item may be presented under a navigation tag, the user-non-public media content item may be presented under a further navigation tag, and the media content item favorited and/or liked by the user may be presented under other navigation tags, etc. However, these media content items are organized and presented in a fixed manner, and especially these media content items are displayed in a tile way. The user work may not be well presented through a single organization and presentation mode, diversified content integration may not be achieved, and user experience is poor.

According to embodiments of the present disclosure, an improved solution for content presentation is provided. In the solution, on the content presentation interface, in a case where a set of media content items is presented in a first view, in response to detecting first switching, the set of media content items will be presented in a second view on the interface. With the solution, it is possible to flexibly switch between different views of content presentation, and provide diversity in media content presentation. The user may switch views as needed to browse media content items, thereby obtaining a better content presentation effect.

Some example embodiments of the present disclosure will be described below with continued reference to the accompanying drawings.

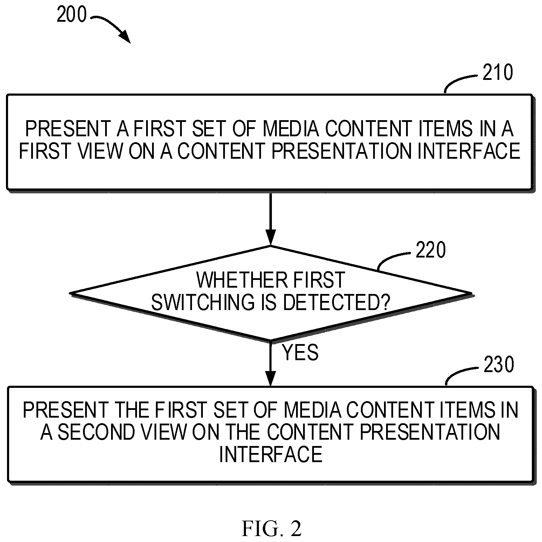

FIG. 2 illustrates a flowchart of a process 200 for content presentation according to some embodiments of the present disclosure. The process 200 may be implemented at the terminal device 110. For ease of discussion, the process 200 will be described with reference to the environment 100 of FIG. 1.

At block 210, the terminal device 110 presents a first set of media content items in a first view on a content presentation interface. The first set of media content items includes at least one media content item.

In some embodiments, the content presentation interface includes an interface for presenting the media content item associated with the user and other relevant information. In some examples, the interface include a profile home interface. In some embodiments, the content presentation interface may be configured as any suitable interface in the application for organizing the media content, embodiments of the present disclosure are not limited in this respect.

In embodiments of the present disclosure, flexible view switching of media content presentation in the content presentation interface is provided. Specifically, at block 220, the terminal device 110 determines whether first switching on the content presentation interface is detected. When the first switching is detected, at block 230, the terminal device 110 presents the first set of media content items in a second view on the content presentation interface.

In some embodiments, the second view may be different from the first view. The second view and the first view may organize the media content item in different ways. In some embodiments, the first view may be a time view, and the second view may be a tile view. Alternatively, the first view may be a tile view, and the second view may be a time view.

In some embodiments, in the time view, the media content item may be presented in a calendar layout and/or a timeline layout. For example, when the media content item is displayed in the calendar layout or the timeline layout, a location of each media content item has a corresponding relationship with a date. For example, in the timeline, when the interval between publication dates of two adjacent media content items is 5 days, the display distance between the two media content items is 5 units. When the interval between publication dates of two adjacent media content items is 2 days, the display distance between the two media content items is 2 units. In this way, the user may know the content published in each time period in an aggregation manner, and obtain global browsing in time.

In some embodiments, in the tile view, the media content items may be presented successively and adjacently in a tile layout. The tile view is sometimes also referred to as a "grid view", i.e., the tile view may include a matrix of media content items made up of multiple grids. In the tile view, each media content item is illustrated in a larger view, facilitating the user to view more clearly.

Since different views may provide different content display effects, the user may flexibly control the content presentation mode through switching.

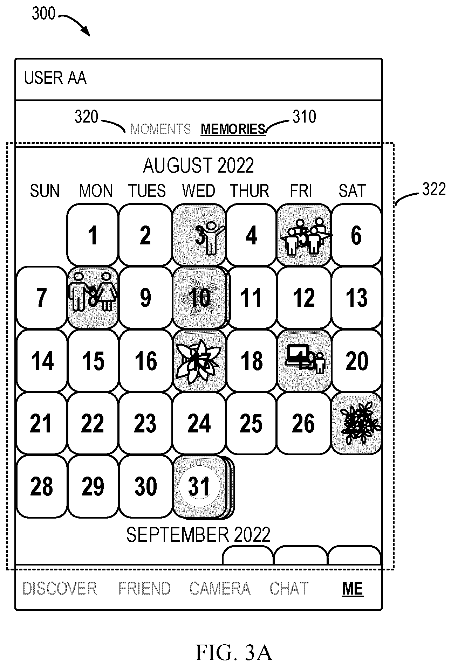

As an example, FIG. 3A illustrates an example content presentation interface 300 of an application 120. On the content presentation interface 300, an example of the first set of media content items is presented in the time view. In this example, the content presentation interface 300 is illustrated as the profile interface of the user, and the content is presented in the calendar layout in the time view. In the area 322 of the content presentation interface 300, each day, week, month, or other defined time period in the calendar may be displayed as a box. In the example of FIG. 3A, each day is displayed as a block. In this way, the respective media content item in the first set of media content items is associated to the display location of a respective time in the calendar layout based on the creation time. Certainly, in addition to the calendar layout, the media content item may also be displayed in the timeline layout.

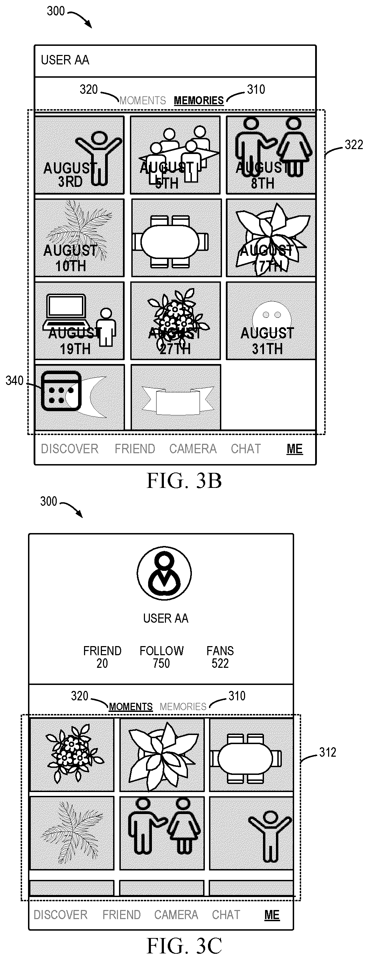

FIG. 3B illustrates an example of presenting a first set of media content items in a tile view in the content presentation interface 300. As illustrated in FIG. 3B, in the tile view, the media content items are presented successively and adjacently in the tile layout. In this example, the media content items are successively arranged and presented according to the creation time.

It should be understood that the interfaces in FIGS. 3A and 3B, and the interfaces in other accompanying drawings that will be described below, are merely example interfaces. In practice, there may be various interface designs. The various graphic elements in the interface may have different arrangements, different names, and different visual representations, one or more of which may be omitted or replaced, and there may also be one or more other elements. Embodiments of the present disclosure are not limited in this respect.

In addition to the time view and the tile view, other views with different content presentation styles may be provided, and flexible switching between multiple views may be supported.

In some embodiments, in the content presentation interface, a view of the different views (e.g., the time view and the tile view) may be set to be presented by default, and may be switched to other views according to a switching operation. For example, the first set of media content items may be presented in the time view by default, and switched to the tile view when the first switching is detected. Certainly, it may also be configured in an opposite way, i.e., the tile view may be set as the default view.

In an embodiment of the present disclosure, the first switching may be configured to implement switching between the views. In some embodiments, the switching for switching from the first view to the second view may be configured to be different from the switching for switching from the second view to the first view. In some embodiments, the same switching may also be set for switching between the presenting of the first view and the presenting of the second view.

In some embodiments, the first switching may include a gesture. As an example, the gesture may include a multi-finger pinch or a multi-finger divergence, such as a two-finger pinch or a two-finger divergence.

In an example, when the time view of FIG. 3A is presented, in response to detecting the two-finger divergence, the time view of FIG. 3A may be switched to the tile view of FIG. 3B. In an example, when the tile view of FIG. 3B is presented, in response to detecting the two-finger pinch, the tile view of FIG. 3B may be switched to the tile view of FIG. 3A. Certainly, in other examples, the same gesture may be set to switch between the two views.

The above provides some examples of view switching. Other switching manners may be defined according to actual application requirements. As an example, the switching for view switching may further include other gestures (e.g., the sliding gesture in a specific direction), a click on a specific switching control, a voice control instruction, triggering of a hardware key, etc. In some embodiments, additionally or alternatively, a view switching control may also be provided in the first view and/or the second view, and the view switching may be controlled by operating the switching control. For example, in the tile view of FIG. 3B, a control 340 may be provided. By detecting the selection of the control 340, the time view of FIG. 3A may be switched to. Embodiments of the present disclosure are not limited in this regard.

In some embodiments, the first set of media content items presented in the first view and the second view may include at least one media content item with public access permission and at least one media content item with non-public access permission.

Generally, after the media content item is created, the creator may set the access permission of the media content item as needed. Here, the media content item with "public access permission" (also referred to as the "public media content item") may refer to the media content item that may be viewed by other users other than the creator. The user capable of viewing the media content item may be the user designated by the creator, or may be any user in the application 120. Here, the media content item with "non-public access permission" (also referred to as the "non-public media content item") may refer to the media content item that is generally accessible only to the creator (for example, the media content item set to "private" or "visible only to oneself"), an unpublished media content item stored in a draft box, etc.

In some embodiments, when the content presentation interface includes the profile interface of an individual user of the application, then the user also has access permission to the media content item created by himself/herself and may control access to the media content item with public and non-public access permission in different views. In some embodiments, when the user of the current application is capable of switching between the presenting of different views of media content items of other users on their content presentation interface, then the presented media content items are those that the user of the current application has access permission for. By aggregating and presenting the media content items with public and non-public permissions in a certain view, it may be convenient for the user to review the various types of media content items he/she has created (including the public media content item and the non-public media content item) in the timeline order. The convenience of user browsing may be improved.

In some conventional user profile interfaces, only public media content item is presented in a reverse time order to present the user's latest content to other users, but this may not facilitate the user browsing and reviewing the content by himself/herself. In some embodiments, under the first view and/or the second view, based on the creation time of the media content item, various types of media content items (including the media content item with public access permission and the media content item with non-public access permission (if any)) created by the user may be presented in the time order. In this way, the media content item created by the user may be aggregated and presented. In addition, by presenting the media content item in the time order, the user may successively browse the historically media content items according to the timeline, thereby achieving the purpose of reviewing historically created content.

In some embodiments, under the first view or the second view, the first set of media content items may be aggregated according to the creation time. In some embodiments, the creation time may also be presented in association with the corresponding media content item, allowing the user to conveniently know the specific or approximate creation time of different media content items.

In some embodiments, the first set of media content items may be presented in the time view. The respective media content item in the first set of media content items may be associated to the display location of the respective time in the time view based on the creation time. In some embodiments, in the time view, the media content item may be presented in the calendar layout and/or the timeline layout. In the time view, the user may conveniently view the media content created in the past.

For example, in the time view of FIG. 3A, the presented media content item includes those created by "User AA" with public access permission and non-public access permission. Each media content item is associated to a different date under the calendar based on its creation time. In the time view, the user may conveniently browse the content created at different times. In this way, the user may have a feeling of diary recording, and the user may also be motivated to create more content to fill up the calendar. In addition, in the calendar layout, the media content items created at different times may be presented in the calendar time order from old to new, which facilitates the user to make historical review.

Similarly, in FIG. 3B, in the tile view, the media content item may be successively presented in the order of creation time. For example, the media content item in the grid in the top-left grid is the earliest created content item (e.g., August 3) among the currently presented media content items, and the media content items with more recent creation times may be presented in the time order from left to right and from top to bottom (e.g., until to August 31). In addition, in FIG. 3B, different times may also be labeled at predetermined locations in the presented media content items.

In some embodiments, when a plurality of media content items are created at a certain time period (e.g., a certain day), the plurality of media content items may be presented in a stacked manner at the corresponding time. For example, in FIG. 3A, on August 10, 2022, and August 31, 2022, a plurality of media content items created on that day are presented in the stacked manner respectively.

In some embodiments, in the time view, for a plurality of media content items created in the same time period, it may be set to select a certain media content item from them to be presented at the corresponding time. For example, the media content item created earliest or latest in these media content items may be selected. Certainly, it may also randomly select a media content item for presentation.

In some embodiments, in the tile view, when a plurality of media content items are created in a certain time period (e.g., a certain day), the plurality of media content items may be presented in order (e.g., based on the finer creation time of the media content item, such as the specific time in a day), and a coarser-grained time (e.g., a specific date) may be labeled at least at the predetermined location of the earliest created media content item in the plurality of media content items. For example, in FIG. 3B, the two media content items created on August 10 may be presented in the time order, and the time annotation "August 10" may be presented at the predetermined location of the earlier created media content item in the two media content items. Similarly, three media content items created on August 31 may be presented in a similar manner. Certainly, it may be understood that, in other embodiments, the corresponding creation time may also be labeled in each media content item.

In some embodiments, due to the limitation of the display area of the interface, in the time view or the tile view, it may not be able to present all public and/or non-public media content items simultaneously. In this case, other times may be switched to by selecting, sliding and other appropriate operations, to present the corresponding media content items. In some embodiments, in the tile view, a timeline control (not illustrated in FIG. 3B) may be provided to facilitate the user to locate the media content item desired to be viewed by sliding the timeline.

It should be understood that FIG. 3A and FIG. 3B only illustrate examples of the time view and the tile view. In practical applications, the time view and the tile view may be designed according to requirements, or other view modes may be designed to present the first set of media content items.

In some embodiments, on the content presentation interface, one or more navigation tags may be provided for navigating to different content columns. For example, the example content presentation interface 300 in FIG. 3A and FIG. 3B at least includes a navigation tag "Memories" 310 and a navigation tag "Moments" 320. The two navigation tags are configured to navigate to different content columns in the content presentation interface 300.

When the content presentation interface is presented, the terminal device 110 may detect whether a certain navigation tag is selected. For example, in the example of FIG. 3A and FIG. 3B, when it is detected that the navigation tag "Memories" 310 is selected, the view as illustrated in FIG. 3A or FIG. 3B is presented, and the user is allowed to perform view switching through the predetermined switching.

In some embodiments of the present disclosure, the media content item created by the user is allowed to be presented in a specific manner, and view switching is allowed. The content presentation and view switching may be navigable through the navigation tag on the interface. In the example of FIG. 3A, it is assumed that after a specific navigation tag (e.g., the navigation tag "Memories" 310) is selected, the media content item may be presented in such the manner and view switching is allowed.

In some embodiments, when the content presentation interface is displayed, a certain navigation tag may be selected by default. In some embodiments, second switching may be set to switch the presentation of different sets of media content items, such as to switch different navigation tags in the content presentation interface. Examples of the second switching for selecting or switching the navigation tag may include a click on the navigation tag, a voice control instruction, triggering of a hardware key, a specific gesture (e.g., a sliding gesture), etc. Embodiments of the present disclosure are not limited in this regard.

In some examples, it is assumed that the navigation tag "Moments" 320 is selected by default when the content presentation interface 300 is presented. When the navigation tag "Moments" 320 is selected, a set of media content items associated with the user is presented in the area 312. The set of media content items is sometimes referred to as the "second set of media content items". Unlike the first set of media content items presented under the first navigation tag "Memories" 310, the second set of media content items includes a second classification attribute different from a first classification attribute corresponding to the first set of media content items. In some embodiments, the classification attributes of different sets of media content items may be divided by access permission of the media content item. For example, the second set of media content items may include one or more media content items with public access permissions, and the first set of media content items may include the media content items with public access permission and non-public access permission. As such, the media content items in the second set of media content items may partially overlap with those in the first set of media content items, and the second set of media content items may include one or more media content items in the first set of media content items. Certainly, the first set of media content items and the second set of media content items may also be divided according to other classification attributes, and embodiments of the present disclosure are not limited in this respect.

In some embodiments, the second set of media content items may also be presented in the reverse time order based on the creation time of the media content item. In some embodiments, the media content items may be presented in a specific view, such as the tile view.

For example, as illustrated in FIG. 3C, when the user opens the content presentation interface 300, the content column under the navigation tag 320 may be presented by default. A set of media content items (e.g., images) with public access permissions may be presented in the area 312 of the content presentation interface 300. In this example, the media content items are presented in the reverse time order and in the tile view. For example, the media content items may be presented in the grid manner. In the reverse time order, the media content item in the grid in the top-left grid is the most recently created, and the media content items with earlier creation times may be presented in the reverse time order from left to right and from top to bottom. Since these media content items have public access permissions, when other users access the content presentation interface 300, they may browse the recent works of the "User AA".

In some cases, when the user's selection of the navigation tag "Memories" 310 is detected, the presentation manner corresponding to the navigation tag "Memories" 310 may be switched to, to present the first set of media content items. In some embodiments, when the creator's selection of the first navigation tag (i.e., the navigation tag "Memories" 310) is detected, the first set of media content items is presented. For example, in terminal devices of other users, the navigation tag "Memories" 310 in the profile interface of the "User AA" may not be presented, or may be configured to be non-selectable.

In some embodiments, when the switching between presenting of the first set of media content items and presenting of the second set of media content items, a size of the display area for presenting the media content item in the content presentation interface may be adjusted, and in the adjusted display area, the first set of media content items or the second set of media content items that is switched to may be presented. In some embodiments, when the switching from the second navigation tag (e.g., the navigation tag "Moments" 320) to the first navigation tag (e.g., the navigation tag "Memories" 310) is detected, the first set of media content items may be presented in a larger area on the content presentation interface 300. For example, when FIG. 3C is switched to FIG. 3A or FIG. 3B, the area for presenting the user information in the content presentation interface 300 may be collapsed, and the display area for presenting the media content item may be expanded from the area 312 to the area 322, such that the user may conveniently view more media content items in the aggregation manner.

In some embodiments, when the switching from the first navigation tag (e.g., the navigation tag "Memories" 310) to the second navigation tag (e.g., the navigation tag "Moments" 320) is detected, the display area for presenting the media content item in content presentation interface 300 may be reduced. For example, when FIG. 3A or FIG. 3B is switched to FIG. 3C, the area for presenting the user information may be expanded, and the display area for presenting the media content item in the content presentation interface 300 is reduced to the area 312. The second set of media content items is presented in the area 312.

In some embodiments, when the first set of media content items is presented and the user reaches the end of the browsing, for example, the earliest created media content item is reached, then further sliding may cause the area 322 to be reduced in size, to present the area that presents the user information on the content presentation interface 300.

In some embodiments, when the second navigation tag is switched to the first navigation tag, the creation time of the media content item, in the second navigation tag, in the focus region of the content presentation interface 300 may be determined, and the media content item whose creation time close to that creation time may be presented in the focus region of the content presentation interface 300, either in the time view or the tile view. Here, the focus region may indicate the center area of the presentation area for the media content item, or any other area that is more easily observable by the user visually. For example, under the navigation tag "Moments" 320, when the user browses to the public media content item around August 8, 2022 and selects the navigation tag "Memories" 310 at this point, then at least the public and/or non-public media content item created near August 2022 may be presented in the time or the tile view, e.g., in the focus region of the content presentation interface 300.

Certainly, under the first navigation tag, the first set of media content items may also be presented in other manners. For example, the first set of media content items may be presented from the earliest created media content item. Embodiments of the present disclosure are not limited in this respect.

In some embodiments, when, while the first navigation tag is selected, an indication of switching from the first navigation tag to the second navigation tag is detected, the content presentation mode under the second navigation tag may be switched to, i.e., to present the second set of media content items presented in the tile view as mentioned above (as illustrated in FIG. 3A). In some embodiments, in the first set of media content items, when one or more target media content items with the second classification attribute (e.g., with the public access permission) is presented in the focus region of the interface, at least these target media content items may be maintained presenting while the second navigation tag is switched to. For example, these target media content items are presented in the focus region of the content presentation interface 300. In other words, under the first navigation tag, when, in the calendar and/or tile view, the user browses to the media content item at a specific time, then the public media content item near the current time may be quickly located when returning to the second navigation tag.

For example, in FIG. 3A or FIG. 3B, when the user browses to the media content item on July 2022 by sliding and clicks the navigation tag "Moments" 320, then when switching back to present the public media content item, the media content item on July 2022 will be presented in the area 312.

In some embodiments, when the first set of media content items is presented, the user may also be allowed to select a specific media content item for detailed viewing. Specifically, in response to detecting a selection of a target media content item in the first set of media content items, a detail interface of the target media content may be presented. In some embodiments, in the time view, when the selection of the target media content item is detected, the tile view may be presented first, in which the target media content item may be more clearly viewed. However, in the tile view, when the selection of the target media content item is detected, the detail interface corresponding to the target media content item may be further viewed. In other embodiments, regardless of whether in the time view or the tile view, in response to detecting the selection of the target media content item, the detail interface corresponding to the target media content item may be presented.

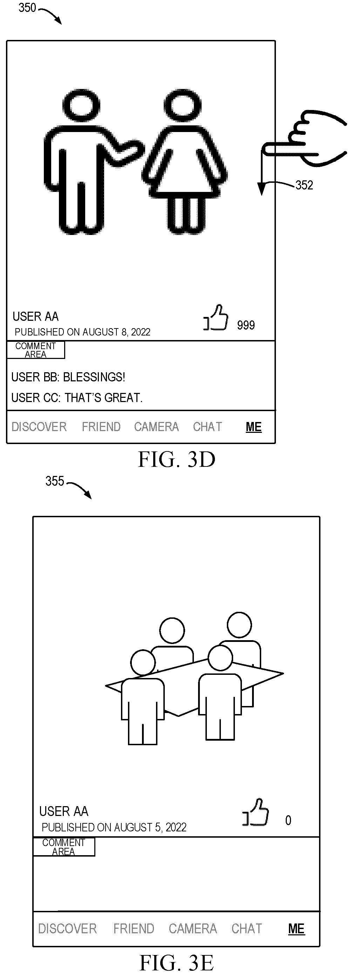

FIG. 3D illustrates a detail interface 350 of a media content item created on August 8, 2022. The detail interface may present a larger view of the media content item and may further present other information related to the media content item, such as like information, comment information, etc. (if any).

In some embodiments, when a target media content item in the first set of media content items is selected for detailed viewing, it is also possible to switch to the information flow mode to browse the first set of media content items. Specifically, the first set of media content items may be organized into the information flow in the time order. The information flow may be in various forms such as a long interface composed of media content items, a video merged from media content items, etc. The media content items may be organized in the time order based on the creation time.

In the currently presented detail interface, when content switching is detected, in the information flow, a detail interface corresponding to a further target media content item adjacent to the currently presented target media content item may be switched to in the time order. As an example, the content switching may include a specific gesture (e.g., the sliding gesture), a sliding on a specific switching control, a voice control instruction, triggering of a hardware key, etc. Embodiments of the present disclosure are not limited in this regard.

As an example, when the content switching is the up-down sliding, in the information flow, in response to detecting a downward sliding gesture, an earlier created media content item adjacent to the current media content item may be switched to. In response to detecting an upward sliding gesture, an earlier created media content item adjacent to the current media content item may be switched to. In FIG. 3D, in the detail interface 350 of the media content item created on August 8, 2022, in response to detecting the downward sliding gesture 352, a detail interface 355 illustrated in FIG. 3E may be switched to, in which the media content item created on August 5, 2022 and its associated information may be presented in detail. In this way, the user may successively browse different media content items in the information flow mode.

In some embodiments, although not illustrated in the drawings, a further navigation tag (for example, a third navigation tag) may also be provided in the content display interface 300. When the navigation tag is selected, a third set of media content items, including the media content items with non-public access permissions, may be presented. In other words, the user-created but unpublished media content items may be presented separately. In some embodiments, the third set of media content items may be presented in the time order based on the creation time. In some embodiments, the third set of media content items may be presented in the reverse time order based on the creation time. In this way, it may be convenient for the user to view the unpublished media content item according to the time order or the reverse time order.

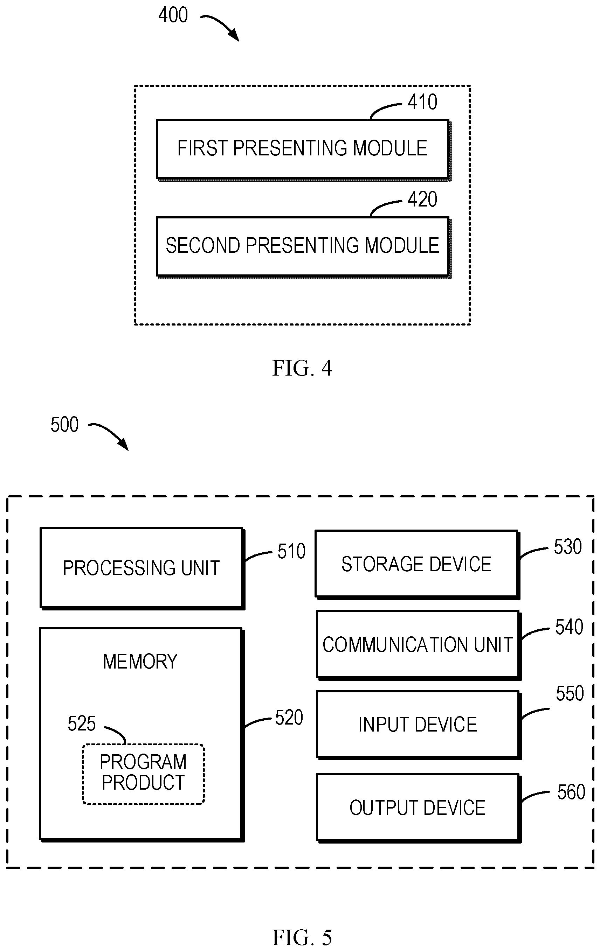

FIG. 4 illustrates a schematic block diagram of an apparatus 400 for content presentation according to some embodiments of the present disclosure. The apparatus 400 may be implemented as the terminal device 110 or included in the terminal device 110. The various modules/components in the apparatus 400 may be implemented by hardware, software, firmware, or any combination thereof.

The apparatus 400 includes a first presenting module 410. The first presenting module 410 is configured to present a first set of media content items in a first view on a content presentation interface. The first set of media content items includes at least one media content item. The apparatus 400 further includes a second presenting module 420. The second presenting module 420 is configured to, in response to detecting first switching on the content presentation interface, present the first set of media content items in a second view on the content presentation interface.

In some embodiments, the first view is a time view, and the second view is a tile view. Alternatively, the first view is a tile view, and the second view is a time view. In some embodiments, in the time view, the at least one media content item is presented in a calendar layout and/or a timeline layout, and in the tile view, the at least one media content item is presented successively and adjacently in a tile layout.

In some embodiments, in the time view, the at least one media content item is associated to a display location of a respective time in a calendar or a timeline based on a creation time. Alternatively, or additionally, in the tile view, the creation time is labeled in a presentation of the at least one media content item.

In some embodiments, in the time view, in response to a first plurality of media content items in the first set of media content items being created at a first time, the first plurality of media content items is presented in a stacked manner at the first time in the time view; or a predetermined media content item of the first plurality of media content items is presented at the first time in the time view.

In some embodiments, in the tile view, in response to a second plurality of media content items in the first set of media content items being created at a second time, the second time is labeled at a predetermined location of at least one media content item of the second plurality of media content items.

In some embodiments, the first switching operation includes a gesture.

In some embodiments, the gesture includes a multi-finger pinch or a multi-finger divergence.

In some embodiments, the first set of media content items includes at least one media content item with public access permission and at least one media content item with non-public access permission.

In some embodiments, the apparatus 400 further includes a third presenting module. The third presenting module is configured to in response to detecting second switching while presenting the first set of media content items, present a second set of media content items on the content presentation interface. The second set of media content items includes a second classification attribute different from a first classification attribute corresponding to the first set of media content items, and the second set of media content items includes one or more media content items in the at least one media content item.

In some embodiments, the third presenting module includes a focus region presenting module. The focus region presenting module is configured to in response to a first target media content item having the second classification attribute in the first set of media content items being presented in a focus region of the content presentation interface before the second switching is detected, maintain presenting of at least the first target media content item in the focus region.

In some embodiments, the third presenting module includes a second tile view presenting module configured to present the second set of media content items in the tile view.

In some embodiments, the apparatus 400 further includes a size adjusting module and an adjusted presenting module. The size adjusting module is configured to in response to detecting switching between presenting of the first set of media content items and presenting of the second set of media content items, adjust a size of a display area for presenting a media content item in the content presentation interface. The adjusted presenting module is configured to present, in the adjusted display area, the first or second set of media content items that is switched to.

In some embodiments, the apparatus 400 further includes a detail interface presenting module configured to in response to detecting a selection for a second target media content item of the first set of media content items, present a first detail interface of the second target media content.

In some embodiments, the apparatus 400 further includes a detail interface switching module. The detail interface switching module is configured to in response to detecting switching on the first detail interface, switch to a second detail interface corresponding to a third target media content item adjacent to the second target media content item in the first set of media content items.

FIG. 5 illustrates a block diagram of an electronic device 500 in which one or more embodiments of the present disclosure may be implemented. It should be understood that the electronic device 500 illustrated in FIG. 5 is merely an example, and should not constitute any limitation on the functionality and scope of the embodiments described herein. The electronic device 500 illustrated in FIG. 5 may be configured to implement the terminal device 110 in FIG. 1.

As illustrated in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, multiple processing units execute computer-executable instructions in parallel to improve parallel processing capabilities of electronic device 500.

The electronic device 500 typically includes a plurality of computer storage media. Such media may be any available media accessible to the electronic device 500, including, but not limited to, volatile and non-volatile media, removable and non-removable media. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 530 may be a removable or non-removable medium and may include a machine-readable medium, such as a flash drive, magnetic disk, or any other medium, which may be capable of storing information and/or data (e.g., training data for training) and may be accessed within electronic device 500.

The electronic device 500 may further include additional removable/non-removable, volatile/non-volatile storage media. Although not illustrated in FIG. 5, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not illustrated) by one or more data media interfaces. The memory 520 may include a computer program product 525 having one or more program modules configured to perform various methods or actions of various embodiments of the present disclosure.

The communication unit 540 is configured to communicate with another electronic device through a communication medium. Additionally, the functionality of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or another network node.

The input device 550 may be one or more input devices such as a mouse, a keyboard, a trackball, or the like. The output device 560 may be one or more output devices, such as a display, a speaker, a printer, or the like. The electronic device 500 may also communicate with one or more external devices (not illustrated) through the communication unit 540 as needed, external devices such as storage devices, display devices, etc., communicate with one or more devices that enable a user to interact with the electronic device 500, or communicate with any device (e.g., a network card, a modem, etc.) that enables the electronic device 500 to communicate with one or more other electronic devices. Such communication may be performed via an input/output (I/O) interface (not illustrated).

According to example implementations of the present disclosure, a computer-readable storage medium having computer-executable instructions stored thereon is provided. The computer-executable instructions are executable by a processor to implement the method described above. According to example implementations of the present disclosure, a computer program product is further provided. The computer program product is tangibly stored on a non-transitory computer-readable medium and includes computer-executable instructions. The computer-executable instructions are executable by a processor to implement the method described above. According to example implementations of the present disclosure, a computer program product having a computer program stored thereon is provided. When the computer program is executed by a processor, the method described above is performed.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for content presentation, comprising:
presenting a first set of media content items in a first view on a content presentation interface, the first set of media content items comprising at least one media content item; and
in response to detecting first switching on the content presentation interface, presenting the first set of media content items in a second view on the content presentation interface.

2. The method of claim 1, wherein the first view is a time view, and the second view is a tile view; or
the first view is a tile view, and the second view is a time view;
wherein in the time view, the at least one media content item is presented in a calendar layout and/or a timeline layout, and in the tile view, the at least one media content item is presented successively and adjacently in a tile layout.

3. The method of claim 2, wherein in the time view, the at least one media content item is associated to a display location of a respective time in a calendar or a timeline based on a creation time; and/or
wherein in the tile view, the creation time is labeled in a presentation of the at least one media content item.

4. The method of claim 2, wherein in the time view, in response to a first plurality of media content items in the first set of media content items being created at a first time,
the first plurality of media content items is presented in a stacked manner at the first time in the time view; or
a predetermined media content item of the first plurality of media content items is presented at the first time in the time view.

5. The method of claim 2, wherein in the tile view, in response to a second plurality of media content items in the first set of media content items being created at a second time, the second time is labeled at a predetermined location of at least one media content item of the second plurality of media content items.

6. The method of claim 1, wherein the first switching comprises a gesture.

7. The method of claim 6, wherein the gesture comprises a multi-finger pinch or a multi-finger divergence.

8. The method of claim 1, further comprising:
in response to detecting second switching while presenting the first set of media content items, presenting a second set of media content items on the content presentation interface, the second set of media content items comprising a second classification attribute different from a first classification attribute corresponding to the first set of media content items, the second set of media content items comprising one or more media content items in the at least one media content item.

9. The method of claim 8, wherein presenting the second set of media content items comprises:
in response to a first target media content item having the second classification attribute in the first set of media content items being presented in a focus region of the content presentation interface before the second switching is detected, maintaining presenting of at least the first target media content item in the focus region.

10. The method of claim 8, further comprising:
in response to detecting switching between presenting of the first set of media content items and presenting of the second set of media content items, adjusting a size of a display area for presenting a media content item in the content presentation interface; and
presenting, in the adjusted display area, the first or second set of media content items that is switched to.

11. The method of any of claims 1 to 10, further comprising:
in response to detecting a selection for a second target media content item of the first set of media content items, presenting a first detail interface of the second target media content.

12. An apparatus for content presentation, comprising:
a first presenting module configured to present a first set of media content items in a first view on a content presentation interface, the first set of media content items comprising at least one media content item; and
a second presenting module configured to in response to detecting first switching on the content presentation interface, present the first set of media content items in a second view on the content presentation interface.

13. The apparatus of claim 12, wherein the first view is a time view, and the second view is a tile view; or
the first view is a tile view, and the second view is a time view;
wherein in the time view, the at least one media content item is presented in a calendar layout and/or a timeline layout, and in the tile view, the at least one media content item is presented successively and adjacently in a tile layout.

14. The apparatus of claim 13, wherein in the time view, the at least one media content item is associated to a display location of a respective time in a calendar or a timeline based on a creation time; and/or
wherein in the tile view, the creation time is labeled in a presentation of the at least one media content item.

15. The apparatus of claim 13, wherein in the time view, in response to a first plurality of media content items in the first set of media content items being created at a first time,
the first plurality of media content items is presented in a stacked manner at the first time in the time view; or
a predetermined media content item of the first plurality of media content items is presented at the first time in the time view.

16. The apparatus of claim 13, wherein in the tile view, in response to a second plurality of media content items in the first set of media content items being created at a second time, the second time is labeled at a predetermined location of at least one media content item of the second plurality of media content items.

17. The apparatus of claim 12, wherein the first switching comprises a gesture.

18. The apparatus of claim 17, wherein the gesture comprises a multi-finger pinch or a multi-finger divergence.

19. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 11.

20. A computer readable storage medium having stored thereon a computer program that, when executed by a processor, performs the method of any of claims 1 to 11.
